# EUROPEAN PATENT APPLICATION

(11) **EP 2 026 309 A1**
(43) Date of publication of application: **18.02.2009**
(21) Application number: 07113824.2
(22) Date of filing: 03.08.2007
(51) Int. Cl.: G08B 21/02, G01S 5/02

(54) **Automatic multi-user system for localization, alarm and personal emergency, operating in multi-standard mode in terrestrial environment**

(71) Applicant: Insigna Security Srl, 20131 Milano (IT)
(72) Inventor: Valverde, Massimo, 20149 Milano (IT)
(74) Representative: Serravalle, Marco

(57) **Abstract**

The present invention concerns an automatic system for localization, alarm and personal emergency, operating in multi-standard mode, wherein the system comprises a remote control base and a remote sensing unit wherein the sensing unit comprises a GPRS/GSM modem (with a SIM card) and preferably a WiFi modem (standard 802.11) and a WiMAX modem (standard 802.16).

The invention also relates to a method for the use of this automatic system wherein the sensing unit measures at regular intervals the position and the other parameters related to the sensor present in the unit, and transmits these data to a central unit which is connected to the sensing unit through a WEB connection established through the GSM-GPRS/EDGE network, but also, in the absence of this signal, through other available communication network, such as UMTS, WiFi and WiMAX; wherein the central unit is programmed in such a way that, when the values of the measured parameters overcome a threshold value, an alarm is activated.

## Description

The present invention relates to an automatic multi-user system for localization, alarm and personal emergency, operating in multi-standard mode.

Personal alarm systems operated in remote mode are well known in the art. US2007/0030156 discloses a personal alarm system including a monitoring base station and remote sensing units in two-way radio communication. The positioning of the user is performed using the Global Positioning System (GPS) and the transmission of the information takes place through a radio transmitter. However, GPS does not allow positioning of the user in indoor situations, and the use of a radio transmitter requires high power when moving far from the monitoring base.

The present invention relates to an automatic multi-user system which allows to localize and georefer in a continuous way and in any geographic area (national or international) both a single user and a group of users. It is possible to visualize the track on a digital map, on a projection of a portion of earth's surface obtained by a satellite, or a mixture of both.

The multi-user system of the present invention comprises a remote sensing unit and a remote control base. The sensing unit comprises: a GPRS/GSM modem (with a SIM card) and preferably a WiFi modem (standard 802.11) and a WiMAX modem (standard 802.16).

The sensing unit is therefore able to maintain a communication with the remote control base through the WEB, in a machine-to-machine connection by a data only communication system, using when necessary the DTM protocol and/or ASCI or GSM-R protocols.

This communication system operates through the GSM-GPRS/EDGE network, but also, in the absence of this signal, through other available communication network, such as UMTS, WiFi and WiMAX.

Furthermore, in a preferred embodiment of the present invention, the sensing unit is able to detect other signals such as GPS and Digital Terrestrial Television (DTT). The possibility of detecting these systems allows the determination of the position in a large variety of conditions. In fact, when the user is in a closed ambient, there is no GPS signal and the positioning by GPS cannot take place. For example, the use of DTT signal allows the determination of the position by triangulation of the distance with two DTT cells. Once the position of all DTT cells are known, the triangulation between two or three different cells allows a precise determination of the position of the user.

Furthermore, the sensing unit of the present invention preferably comprises a sensor for magnetic fields. In a preferred embodiment the sensor measures the magnetic field deriving from the electric distribution network. This sensor, together with the means previously defined, increases the precision in the determination of the position of the user. The magnetic field sensor can also be used to detect thunderbolt and transmit this information to the central unit which elaborates the data coming from all users to define a map of the thunderbolts in a defined area.

Depending on the intended use, it is also possible to introduce in the sensing unit a variety of sensors which might be of use in the determination of potential alarms or hazards.

For example, it is possible to introduce in the sensing unit one or more of the following sensors: temperature, pressure, smoke, humidity, acceleration, light, etc.

The sensing unit will transfer all the measured data (position plus data from all sensors) to the remote control unit at regular intervals. The interval will be preferably not longer than 1 min, more preferably not longer than 30 seconds, most preferably not longer than 20 seconds. An example of a suitable interval is for example 15 seconds.

Although the sensing unit has a variety of different means for communicating with the remote control unit, it is possible that, for a short period, the sensing unit is in a "dark" area, i.e. an area not covered by any communication network. In this case, the sensing unit has a memory which allows storage of the data. Preferably the memory of the sensing unit is able to store data for at least 4 h, more preferably for at least 12 h, most preferably for at least 24 h.

Once the connection with the central unit is re-established, the sensing unit will transfer all stored data to the central unit, allowing a complete reconstruction of the positioning of the user at any time.

In a preferred embodiment of the invention, the different sensors present in the sensing unit are preferably used for the determination of alarm conditions. For example, during winter time, skiers in wild areas are sometimes ran over by a snow slide. In this case, the presence of a pressure sensor would indicate to the central unit that the pressure has increased significantly, activating the emergency procedure.

In another preferred embodiment, the present invention relates to a method for the use of an automatic system for localization, alarm and personal emergency, operating in multi-standard mode, wherein the system comprises a remote sensing unit and a remote control base, wherein the sensing unit measures at regular intervals the position and the other parameters related to the sensor present in the unit, and transmits these data to a central unit which is connected to the sensing unit through a WEB connection established through the GSM-GPRS/EDGE network, but also, in the absence of this signal, through other available communication network, such as UMTS, WiFi and WiMAX; wherein the central unit is programmed in such a way that, when the values of the measured parameters overcome a threshold value, an alarm is activated.

In a preferred embodiment of the invention, the central unit is programmed with at least two different emergency procedures. A first emergency procedure will be activated automatically, for situations which always require intervention of emergency unit.

If the alarm is relating to a situation which does not always require intervention of emergency unit, then it will require the intervention of a human operator. One example of this type of alarm is, for example, when a user remains in a "dark" area for more than a fixed time. When the fixed time is lapsed, the central unit activates an alarm. This situation is potentially dangerous because the user might stay in the dark area as a consequence of an accident. However, it is also possible that the user stays in that area voluntarily. Thus, it will be up to the operator to ascertain whether it is necessary to alert the emergency unit.

In another preferred embodiment of the invention the sensing unit makes use of a proximity tag. More specifically, the sensing unit detects the proximity of a tag and, when the distance with the tag overcomes a prefixed value, it sends an alarm signal to the central unit. This type of configuration could be used on defibrillators.

It is becoming more and more common for cardiopath patients to have a defibrillator at home. This allows fast intervention and increases the chance of saving the life of the patient after a cardiac crisis. However, due to the stress induced by the situation in people who are not medical or paramedical, an ambulance is often called only after a certain time from the crisis. By placing a sensing unit with a proximity tag on the defribillator, it would be possible to activate an alarm immediately when opening the defibrillator. The distance between tag and sensor would increase and the alarm activated. It would be also possible to introduce an audio alarm, in case the defibrillator is opened for other reasons than its intended use. In that case the user could deactivate the alarm by pushing a button.

In another preferred embodiment of the invention, the system can be used for activating emergency procedures in case of accident. In this case, the sensing unit will contain an accelerometer. In case of important crash, the accelerometer will measure a high value of acceleration, which indicates without any doubt the emergency. This would activate the procedure for aid to the people involved with the crash in real time, without waiting for witnesses who call emergency numbers.

It is apparent from the description given above that the system of the present invention represents an important improvement over existing systems for localization, alarm and personal emergency in the domestic and road environment, as well as woodlands and mountains. The present system also fulfils the requirements of the incoming European Emergency Number 112, making it possible to largely improve the time and the effectiveness of the relief or rescue effort after any emergency.

## Claims

1. Sensing unit for use in an automatic multi-user system for localization, alarm and personal emergency, operating in multi-standard mode, wherein the sensing unit comprises a GPRS/GSM modem (with a SIM card), a WiFi modem (standard 802.11) and a WiMAX modem (standard 802.16).

2. Sensing unit according to claim 1 wherein the sensing unit is able to detect other signals such as GPS and Digital Terrestrial Television (DTT).

3. Sensing unit according to claims 1 and 2 wherein the sensing unit further comprises a magnetic field sensor.

4. Sensing unit according to claims 1-3 wherein the sensing unit further comprises one or more of the following sensors: temperature, pressure, smoke, humidity, acceleration, light.

5. Automatic system for localization, alarm and personal emergency, operating in multi-standard mode in terrestrial environment, wherein the system comprises a remote control base and a remote sensing unit according to claims 1-4.

6. Automatic system according to claim 5 wherein the sensing unit transfers all the measured data (position plus data from all sensors) to the remote control unit at regular intervals.

7. Method for the use of the automatic system of claims 1-5 wherein the sensing unit measures at regular intervals the position and the other parameters related to the sensor present in the unit, and transmits these data to a central unit which is connected to the sensing unit through a WEB connection established through the GSM-GPRS/EDGE network, but also, in the absence of this signal, through other available communication network, such as UMTS, WiFi and WiMAX, wherein the central unit is programmed in such a way that, when the values of the measured parameters overcome a threshold value, an alarm is activated.
